# FASCICULE DE BREVET EUROPEEN

(11) **EP 3 119 665 B1**
(45) Date de publication et mention de la délivrance du brevet: **30.01.2019**
(21) Numéro de dépôt: 15709227.1
(22) Date de dépôt: 09.02.2015
(51) Int. Cl.: B62D 25/20, B60G 9/02

(54) **STRUCTURE ARRIÈRE DE VÉHICULE AUTOMOBILE**
HECKSTRUKTUR EINES KRAFTFAHRZEUGS
REAR STRUCTURE OF A MOTOR VEHICLE

(30) Priorité: 18.03.2014 FR 1452230
(43) Date de publication de la demande: 25.01.2017
(73) Titulaire: Renault S.A.S., 92100 Boulogne-Billancourt (FR)
(72) Inventeur: CAILLARD, Jerome, F-91190 Gif Sur Yvette (FR); HLUBINA, Thierry, F-92370 Chaville (FR); RIOULT, Olivier, F-78960 Voisins Le Bretonneux (FR)
(86) Numéro de dépôt international: PCT/FR2015/050297
(87) Numéro de publication internationale: WO 2015/140425

(56) Documents cités:
- EP-A1- 0 560 242
- DE-A1-102009 041 702
- GB-A- 2 056 382

## Description

L'invention concerne une structure arrière de véhicule automobile comprenant un composant de train avec fixation centrale.

On connaît des véhicules pourvus d'une structure arrière comprenant un composant de train avec une fixation centrale, par exemple un train de Dion, monté en pivotement autour d'un axe y, cet axe étant horizontal et perpendiculaire au sens de déplacement dans le référentiel du véhicule. Un palier peut ainsi permettre d'assurer la rotation en y du composant de train, afin de compenser les éventuels défauts de planéité du sol et/ou d'absorber les contraintes induites lors du choc frontal.

Un composant de train avec fixation centrale peut permettre une conception de véhicule plus compacte qu'un composant de train en H.

L'élément articulé au train pour cette rotation en y peut être susceptible de subir des efforts dans le sens du déplacement du véhicule (efforts en x) relativement importants, notamment en cas de freinage brusque ou de collision. Il existe donc un risque de rupture ; en particulier une traverse peut être susceptible de se dessouder relativement facilement.

Le document DE 10 2009 041702 A1 décrit une structure arrière de véhicule automobile comprenant un composant de train avec une fixation centrale au soubassement.

Il existe un besoin pour une structure arrière plus robuste.

Il est proposé une structure arrière de véhicule automobile comprenant :
- un composant de soubassement pour soutenir un plancher de véhicule automobile et dans lequel est ménagé un tunnel,
- un composant de train comprenant une partie centrale et, de part et d'autre de la partie centrale, deux parties latérales définissant avec la partie centrale un espace pour recevoir un organe du véhicule, par exemple un moteur,
- un dispositif d'articulation comprenant un premier élément d'articulation et un deuxième élément d'articulation aptes à pivoter l'un par rapport à l'autre, le premier élément d'articulation étant fixé ou intégré, directement ou indirectement, à la partie centrale du composant de train et le deuxième élément d'articulation étant fixé ou intégré, directement ou indirectement, au composant de soubassement, la structure arrière étant agencée de sorte que le premier et le deuxième éléments d'articulation soient aptes à pivoter l'un par rapport à l'autre autour d'un axe sensiblement horizontal et sensiblement perpendiculaire au sens de déplacement du véhicule dans le référentiel du véhicule automobile, lorsque le premier et le deuxième éléments d'articulation sont ainsi fixés ou intégrés à la partie centrale du composant de train et au composant de soubassement, respectivement, du véhicule automobile,
- au moins un élément de renfort avant fixé d'une part au deuxième élément d'articulation et d'autre part au tunnel, la structure arrière étant agencée pour que ledit au moins un élément de renfort avant permette de transmettre au tunnel au moins une partie des efforts dans la direction du déplacement du véhicule automobile issus du composant de train.

Ainsi, les efforts peuvent être mieux répartis que dans l'art antérieur, de sorte que le risque de désolidarisation du dispositif d'articulation par rapport au composant de soubassement est réduit. Cette structure arrière permet ainsi de réaliser un véhicule automobile avec un composant de train à fixation centrale plus fiable que dans l'art antérieur, et en outre relativement léger.

Le composant de train peut par exemple comprendre un train de Dion, ou autre.

Le tunnel peut être agencé pour transmettre vers l'avant du véhicule des efforts relativement importants.

En particulier, le tunnel peut être relativement rectiligne, avoir une section en forme de U inversé, être réalisé par profilage (« roll forming » en anglais) et/ou être réalisé en un matériau à haute limite élastique.

Le tunnel peut être conformé de façon à définir un passage pour un ou plusieurs éléments allongés, par exemple un arbre de transmission ou bien encore des câbles.

Le tunnel peut recevoir des éléments fixés au centre du véhicule automobile, par exemple des capteurs, un levier de vitesse, un frein à main.

Le tunnel constitue une voie de passage d'effort longitudinal. Le tunnel peut à cet effet s'étendre longitudinalement de façon rectiligne, et être disposé dans le véhicule de façon à s'étendre dans la direction des efforts longitudinaux (axe x).

Le tunnel peut former avec le plancher un corps creux.

L'invention trouve également une application particulièrement intéressante dans le cas de véhicules à moteur arrière car le ou les élément(s) de renfort avant peu(ven)t alors permettre de répartir des efforts susceptibles d'être relativement importants.

L'organe du véhicule reçu dans l'espace défini par le composant de train peut ainsi comprendre un moteur arrière, par exemple un moteur de propulsion, ou bien un autre organe.

Néanmoins, l'invention peut tout à fait être utilisée pour un véhicule à moteur avant.

Le deuxième élément d'articulation peut être fixé ou intégré directement au composant de soubassement, c'est-à-dire que le composant de train est monté en rotation directement sur le composant de soubassement, sans berceau. L'invention trouve une application particulièrement intéressante lorsque le composant de train est monté en rotation directement sur le composant de soubassement, puisque la répartition des efforts peut être plus délicate que lorsqu'un berceau est prévu.

Alternativement, la structure arrière peut comprendre un berceau entre le composant de soubassement et le deuxième élément d'articulation.

L'invention n'est pas limitée à une forme particulière du dispositif d'articulation. Le premier élément d'articulation peut comprendre un arbre et le deuxième élément d'articulation peut comprendre un palier coopérant avec cet arbre, ou inversement. Le palier peut par exemple comprendre un coussinet de forme tubulaire avec ou sans collerette. On peut aussi prévoir un guidage en rotation par des roulements. Le dispositif d'articulation peut par exemple comprendre un rouleau à billes.

Avantageusement et de façon non limitative, le deuxième élément d'articulation peut comprendre au moins un flasque, par exemple deux flasques, intégré(s) au composant de soubassement. Dit autrement, le composant de soubassement peut comprendre une partie de soubassement, dans laquelle est ménagé le tunnel, et au moins un flasque formant (éventuellement avec d'autres pièces) le deuxième élément d'articulation.

Dans un mode de réalisation avantageux, (le ou) les flasque(s) peuvent être obtenus par emboutissage. Le composant de soubassement peut ainsi être relativement facile à fabriquer. On pourra par exemple prévoir de souder (le ou) les flasque(s) à la partie de soubassement.

Lorsque le deuxième élément d'articulation comprend deux flasques en regard l'un de l'autre, ce deuxième élément peut par exemple comprendre en outre une tige insérée rigidement dans deux évidements respectifs des flasques, et maintenue par exemple au moyen d'un écrou.

Le premier élément d'articulation peut par exemple comprendre une bague montée en rotation autour de cette tige et solidarisée à la partie centrale du composant du train.

Le premier élément d'articulation peut comprendre une bague additionnelle montée autour de la partie centrale du composant de train et d'une seule pièce avec la bague montée autour de la tige.

Les éléments d'articulation peuvent ainsi être ou non d'une seule pièce.

Avantageusement et de façon non limitative, le ou les élément(s) de renfort avant peu(ven)t être obtenus par emboutissage.

Les éléments de renfort avant sont ainsi relativement faciles à fabriquer.

Les éléments de renfort avant peuvent être fixés au composant de soubassement et au deuxième élément d'articulation, par exemple par soudure, vissage ou autre. La structure arrière comporte en outre au moins un élément de renfort arrière, dit aussi membrure, fixé au deuxième élément d'articulation d'une part, et d'autre part au composant de soubassement, la structure arrière étant agencée pour que ledit au moins un élément de renfort arrière permette de transmettre au composant de soubassement au moins une partie des efforts verticaux issus du composant de train.

Le ou les élément(s) de renfort arrière peu(ven)t avoir une forme cintrée, une portion de cintre reposant sur le dispositif d'articulation et une autre portion du cintre, opposée à la portion reposant sur le dispositif d'articulation, reposant sur le composant de soubassement.

Le ou les élément(s) de renfort arrière peu(ven)t avantageusement être obtenus par un emboutissage.

Le ou les élément(s) de renfort arrière peu(ven)t avantageusement être soudés au deuxième élément d'articulation et au composant de soubassement.

Avantageusement et de façon non limitative, le deuxième élément d'articulation et l'élément de renfort avant peuvent être disposés l'un par rapport à l'autre sensiblement alignés suivant l'axe x de la direction de déplacement du véhicule. Les efforts en x sont ainsi relativement bien transmis du dispositif d'articulation vers l'élément de renfort avant. L'élément de renfort arrière et le deuxième élément d'articulation sont disposés l'un par rapport à l'autre sensiblement alignés suivant une direction verticale dans le référentiel du véhicule (axe z). Les efforts verticaux peuvent ainsi être relativement bien transmis de l'élément de renfort arrière au composant de soubassement.

Il est en outre proposé un véhicule automobile comprenant une structure arrière telle que décrite ci-dessus.

L'invention sera mieux comprise en référence aux figures, lesquelles illustrent des modes de réalisation donnés à titre d'exemple et non limitatifs.
La figure 1 est une vue en perspective de la partie arrière d'un véhicule automobile selon un mode de réalisation, certaines pièces, et notamment le composant de train arrière, n'étant pas représentées.
La figure 2 est une vue en perspective d'une portion de structure arrière selon le mode de réalisation de la figure 1, certaines pièces n'étant pas représentées.
La figure 3 est une vue en perspective d'une partie de structure arrière selon un mode de réalisation de l'invention.
La figure 4 est une vue en perspective et en coupe, selon l'axe y, d'une partie de structure arrière, selon un mode de réalisation de l'invention.

Des références identiques seront utilisées d'une figure à l'autre pour désigner des éléments identiques ou similaires, dans leur forme ou dans leur fonction.

Dans la présente demande, les axes x, y, z sont les axes classiquement utilisés dans le domaine de l'automobile pris dans le référentiel de l'automobile, c'est-à-dire que l'axe x est l'axe avant arrière du véhicule, correspondant à la direction de déplacement lorsque le volant est droit, que l'axe z est colinéaire au vecteur gravité et de sens opposé à ce vecteur gravité lorsque le véhicule est posé avec ses roues sur un sol plat, et que l'axe y, ou axe latéral est perpendiculaire aux axes x et z, les axes x, y, z formant un repère orthonormé.

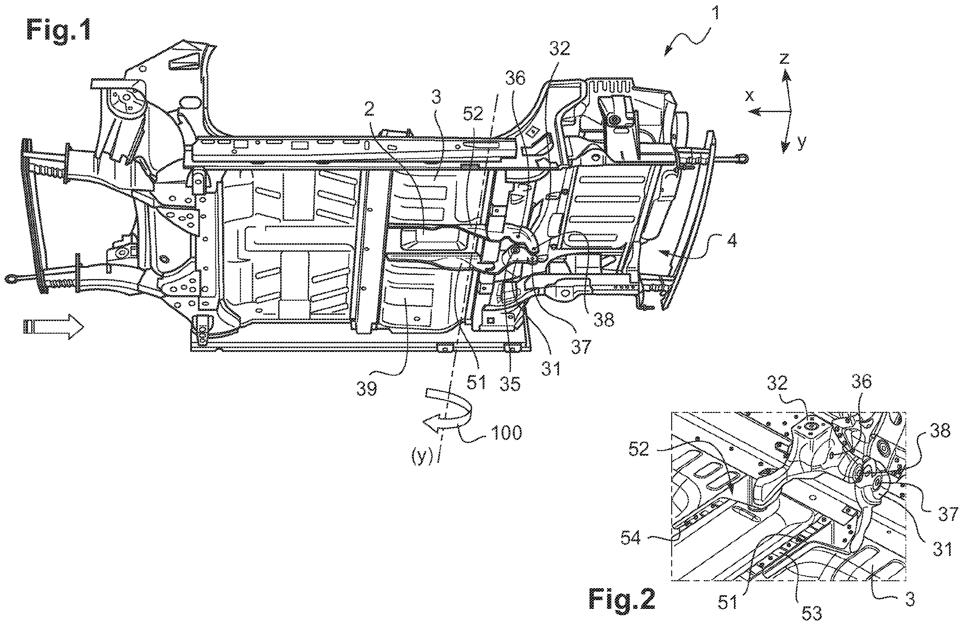

En référence à la figure 1, un véhicule automobile 1 comprend un composant de soubassement 3 dans lequel est ménagé un tunnel 2.

Le composant de soubassement 3 comprend une partie de soubassement 39, dans laquelle est ménagé le tunnel 2, et deux flasques 31, 32 soudés à la partie de soubassement 39.

Ces flasques 31, 32 sont obtenus à partir de tôles, par emboutissage.

Ces flasques 31, 32 définissent deux évidements 35, 36 en regard l'un de l'autre, et destinés à recevoir une tige (non représentée), sur laquelle est montée en rotation une bague (non représentée) solidarisée à une autre bague (non représentée), cette autre bague étant montée, rigidement ou en rotation, sur une partie centrale d'un composant de train à fixation centrale non représenté. La pièce (non représentée) intégrant ces deux bagues forme un premier élément d'articulation.

La tige est rigide relativement aux flasques 31, 32 et forme avec ces flasques un deuxième élément d'articulation. Le deuxième élément d'articulation est donc en plusieurs pièces.

Les premier et deuxième éléments d'articulations sont ainsi susceptibles de pivoter l'un par rapport à l'autre autour d'un axe parallèle ou sensiblement parallèle à l'axe y du véhicule.

Le premier élément d'articulation est fixé au composant de train non représenté, par exemple un train de Dion, ce composant de train comprenant une partie centrale ainsi montée articulée sur les flasques 31, 32, et, de part et d'autre de cette partie centrale, deux parties latérales. Ce composant de train définit ainsi un espace 4 pour recevoir un moteur de propulsion non représenté.

Les flasques 31, 32 forment avec la tige et les bagues un dispositif d'articulation entre le train de Dion et le composant de soubassement 3.

Ce dispositif d'articulation permet un pivotement autour de l'axe y, ce pivotement étant représenté par la flèche 100.

Dans ce mode de réalisation, le dispositif d'articulation est ainsi conformé pour que le train de Dion soit monté en rotation directement sur le composant de soubassement 3, sans berceau.

Le composant de soubassement 3 reçoit donc les efforts issus du train de Dion, et en particulier les efforts issus du moteur.

Les flasques 31, 32 définissent deux évidements supplémentaires 37, 38 pour recevoir une tige additionnelle (non représentée) sur laquelle est montée une biellette de reprise de couple du moteur (non représentée).

Les flasques 31, 32 reçoivent ainsi une quantité d'efforts issus du moteur.

Le dispositif d'articulation et la partie centrale du composant de train de Dion constituent ainsi une zone relativement sollicitée formant à la fois palier pour la rotation en y, et support de transmission d'autres efforts, notamment des efforts suivant l'axe x et/ou l'axe z, en particulier en cas de choc frontal.

Des éléments de renfort avant 51, 52 permettent de mieux absorber au moins une partie de ces efforts. Ces éléments de renfort avant 51, 52, sont obtenus à partir d'une tôle réalisée par emboutissage.

Ces éléments de renfort avant 51, 52 sont d'une part fixés aux flasques respectifs 31, 32, par soudure. A cet effet, les flasques 31, 32 et les éléments de renfort avant 51, 52 définissent des surfaces de soudage destinées à être solidarisées les unes avec les autres.

Par ailleurs, les éléments de renfort avant 51, 52 définissent des surfaces de soudage additionnelles 53, 54 (figure 2) pour la fixation par soudure au composant de soubassement 3. Comme représenté sur la figure 2, les éléments de renfort avant 51, 52 sont ainsi soudés de part et d'autre du tunnel 2.

Les éléments de renfort avant 51, 52 peuvent ainsi permettre de transmettre vers le tunnel 2 les efforts éventuels venant de la zone de palier, c'est-à-dire de la partie centrale du train de Dion et des flasques 31, 32, sur les parois du tunnel 2. Le tunnel 2 étant un élément relativement résistant, ces efforts pourront ainsi être absorbés avec un risque de casse limité.

Ces éléments de renfort avant 51, 52 permettent ainsi de concilier fiabilité du véhicule et légèreté.

Ces éléments de renfort avant 51, 52 peuvent permettre d'absorber les efforts issus du moteur en cas de choc arrière, mais aussi en cas de choc avant, le moteur constituant alors une masse poussante. Dit autrement, les éléments de renfort avant 51, 52 permettent d'améliorer les inertances d'axe x.

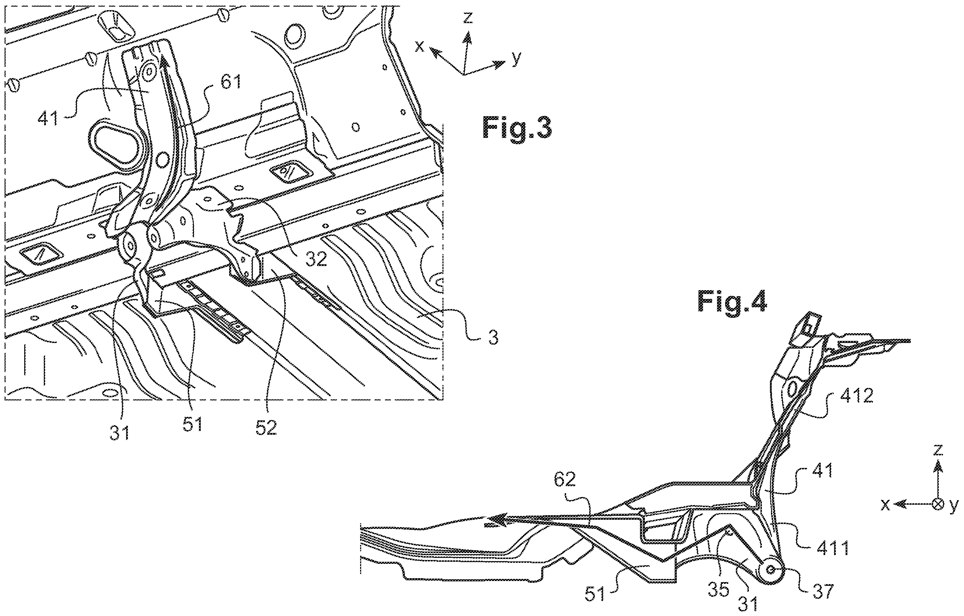

En référence aux figures 3 et 4, lesquelles seront commentées simultanément, la structure arrière de véhicule automobile comporte en outre un élément de renfort arrière, ou membrure 41.

L'élément de renfort arrière 41 est fixé aux flasques 31, 32, par exemple par soudure.

L'élément de renfort arrière 41 a une forme relativement cintrée, une partie 411 du cintre étant soudée aux flasques 31,32, une autre partie 412 de l'élément 41, opposée à la partie 411, étant soudée au composant de soubassement 3.

Cette membrure 41 constitue ainsi en quelque sorte une butée naturelle pour le moteur lors d'un choc, et permet d'améliorer la transmission des efforts en z des vibrations.

Ces renforts 41, 51, 52 permettent en outre d'assurer une bonne tenue d'endurance de cette zone de palier.

Le palier central de la fixation de train arrière est ainsi renforcé, ce renforcement permettant de compenser les efforts de rotation autour du palier autour de l'axe y.

Comme il ressort de la figure 4, les deux ensembles formés par les renforts avant respectifs, les flasques correspondants et les parois correspondantes du tunnel sont chacun relativement alignés avec l'axe x du véhicule permettant ainsi d'assurer une bonne transmission des efforts en x (flèche 62); et l'ensemble formé par l'élément de renfort arrière 41, les flasques et la partie montante du composant de soubassement, en contact avec l'élément de renfort arrière, est relativement aligné avec l'axe z, permettant ainsi une relativement bonne transmission des efforts en z, suivant la flèche référencée 61 sur la figure 3.

Les renforts 51, 52 et 41 permettent de transmettre les efforts, selon les flèches respectives 61, 62 des figures 3 et 4, tout en limitant le bridage des flasques de palier pour permettre une rotation suivant l'axe y convenable et de ne pas consommer la totalité du couple de serrage de la vis pour rapprocher les flasques, lors du montage du composant de train et du serrage du palier sur les flasques.

Le renfort arrière 41 lie deux zones relativement rigides et éloignées l'une de l'autre avec une relativement faible inertie du fait de la proximité du moteur et des débattements associés, et ce grâce à cette forme relativement cintrée.

Le tunnel 2 est réalisé par profilage (« roll forming » en anglais), dans un matériau à haute limite élastique, afin de transmettre els efforts vers le reste du véhicule automobile.

## Revendications

1. Structure arrière (1) de véhicule automobile comprenant :
- un composant de soubassement (3) pour soutenir un plancher de véhicule automobile et dans lequel est ménagé un tunnel (2),
- un composant de train comprenant une partie centrale et, de part et d'autre de la partie centrale, deux parties latérales définissant avec la partie centrale un espace pour recevoir un organe du véhicule,
- un dispositif d'articulation comprenant un premier élément d'articulation et un deuxième élément d'articulation (31, 32) aptes à pivoter l'un par rapport à l'autre, le premier élément d'articulation étant fixé ou intégré à la partie centrale du composant de train et le deuxième élément d'articulation étant fixé ou intégré au composant de soubassement, la structure arrière étant agencée de sorte que le premier et le deuxième éléments d'articulation soient aptes à pivoter l'un par rapport à l'autre autour d'un axe (y) sensiblement horizontal et sensiblement perpendiculaire au sens de déplacement du véhicule dans le référentiel du véhicule automobile, lorsque le premier et le deuxième éléments d'articulation sont ainsi fixés ou intégrés à la partie centrale du composant de train et au composant de soubassement, respectivement, du véhicule automobile,
- au moins un élément de renfort avant (51, 52) fixé d'une part au deuxième élément d'articulation et d'autre part au tunnel, la structure arrière étant agencée pour que ledit au moins un élément de renfort avant permette de transmettre au tunnel au moins une partie des efforts dans la direction du déplacement du véhicule automobile issus du composant de train, **caractérisé en ce qu'**elle comprend en outre au moins un élément de renfort arrière (41) fixé au deuxième élément d'articulation (31, 32) d'une part, et d'autre part au composant de soubassement (3), la structure arrière étant agencée pour que ledit au moins un élément de renfort arrière permette de transmettre au composant de soubassement au moins une partie des efforts verticaux issus du composant de train, l'élément de renfort arrière (41) et le deuxième élément d'articulation (31, 32) étant disposés l'un par rapport à l'autre sensiblement alignés suivant la direction verticale (z) dans le référentiel du véhicule.

2. Structure arrière (1) de véhicule automobile selon la revendication 1, dans laquelle l'organe de véhicule reçu dans l'espace défini par le composant de train comprend un moteur arrière.

3. Structure arrière (1) de véhicule automobile selon l'une quelconque des revendications 1 ou 2, dans laquelle le deuxième élément d'articulation est fixé ou intégré directement au composant de soubassement (3).

4. Structure arrière (1) de véhicule automobile selon la revendication 3, dans laquelle le deuxième élément d'articulation comprend deux flasques (31, 32) intégrés au composant de soubassement.

5. Structure arrière (1) de véhicule automobile selon l'une quelconque des revendications 1 à 4, dans laquelle ledit au moins un élément de renfort avant (51, 52) est obtenu par emboutissage.

6. Structure arrière (1) de véhicule automobile selon l'une quelconque des revendications 1 à 5, dans laquelle le deuxième élément d'articulation (31, 32) et l'élément de renfort avant (51, 52) sont disposés l'un par rapport à l'autre sensiblement alignés suivant la direction de déplacement du véhicule (x).

7. Véhicule automobile comprenant une structure arrière selon l'une quelconque des revendications 1 à 6.

## Patentansprüche

1. Heckstruktur (1) eines Kraftfahrzeugs, welche umfasst:
- eine Unterbodenkomponente (3) zum Stützen eines Kraftfahrzeugbodens, in welcher ein Tunnel (2) ausgebildet ist,
- eine Fahrwerkskomponente, die einen mittleren Teil und beiderseits des mittleren Teils zwei seitliche Teile, die mit dem mittleren Teil einen Raum zum Aufnehmen eines Organs des Fahrzeugs definieren, umfasst,
- eine Gelenkvorrichtung, die ein erstes Gelenkelement und ein zweites Gelenkelement (31, 32) umfasst, die in der Lage sind, relativ zueinander zu schwenken, wobei das erste Gelenkelement am mittleren Teil der Fahrwerkskomponente befestigt oder in diesen integriert ist und das zweite Gelenkelement an der Unterbodenkomponente befestigt oder in diese integriert ist, wobei die Heckstruktur so gestaltet ist, dass das erste und das zweite Gelenkelement in der Lage sind, relativ zueinander um eine Achse (y) zu schwenken, die im Wesentlichen horizontal und im Wesentlichen senkrecht zur Bewegungsrichtung des Fahrzeugs im Bezugssystem des Kraftfahrzeugs ist, wenn das erste und das zweite Gelenkelement auf diese Weise am mittleren Teil der Fahrwerkskomponente bzw. an der Unterbodenkomponente des Kraftfahrzeugs befestigt oder darin integriert sind,
- wenigstens ein vorderes Verstärkungselement (51, 52), das einerseits am zweiten Gelenkelement und andererseits am Tunnel befestigt ist, wobei die Heckstruktur so ausgebildet ist, dass das wenigstens eine vordere Verstärkungselement ermöglicht, auf den Tunnel wenigstens einen Teil der Kräfte in der Richtung der Bewegung des Kraftfahrzeugs zu übertragen, die von der Fahrwerkskomponente ausgehen, **dadurch gekennzeichnet, dass** sie außerdem wenigstens ein hinteres Verstärkungselement (41) umfasst, das an dem zweiten Gelenkelement (31, 32) einerseits und an der Unterbodenkomponente (3) andererseits befestigt ist, wobei die Heckstruktur so ausgebildet ist, dass das wenigstens eine hintere Verstärkungselement ermöglicht, auf die Unterbodenkomponente wenigstens einen Teil der vertikalen Kräfte zu übertragen, die von der Fahrwerkskomponente ausgehen, wobei das hintere Verstärkungselement (41) und das zweite Gelenkelement (31, 32) relativ zueinander im Wesentlichen in der vertikalen Richtung (z) im Bezugssystem des Fahrzeugs ausgerichtet angeordnet sind.

2. Heckstruktur (1) eines Kraftfahrzeugs nach Anspruch 1, wobei das Organs des Fahrzeugs, das in dem von der Fahrwerkskomponente definierten Raum aufgenommen ist, einen Heckmotor umfasst.

3. Heckstruktur (1) eines Kraftfahrzeugs nach einem der Ansprüche 1 oder 2, wobei das zweite Gelenkelement direkt an der Unterbodenkomponente (3) befestigt oder in diese integriert ist.

4. Heckstruktur (1) eines Kraftfahrzeugs nach Anspruch 3, wobei das zweite Gelenkelement zwei Flansche (31, 32) umfasst, die in die Unterbodenkomponente integriert sind.

5. Heckstruktur (1) eines Kraftfahrzeugs nach einem der Ansprüche 1 bis 4, wobei das wenigstens eine vordere Verstärkungselement (51, 52) durch Ziehen hergestellt ist.

6. Heckstruktur (1) eines Kraftfahrzeugs nach einem der Ansprüche 1 bis 5, wobei das zweite Gelenkelement (31, 32) und das vordere Verstärkungselement (51, 52) relativ zueinander im Wesentlichen in der Bewegungsrichtung des Fahrzeugs (x) ausgerichtet angeordnet sind.

7. Kraftfahrzeug, welches eine Heckstruktur nach einem der Ansprüche 1 bis 6 umfasst.

## Claims

1. Motor vehicle rear structure (1) comprising:
- an underframe component (3) for supporting a motor vehicle floor and in which a tunnel (2) is formed,
- an axle component comprising a central part and, on each side of the central part, two lateral parts defining, with the central part, a space to accommodate a component of the vehicle,
- an articulation device comprising a first articulation element and a second articulation element (31, 32) which are able to pivot relative to one another, the first articulation element being fixed to or integrated into the central part of the axle component and the second articulation element being fixed to or integrated into the underframe component, the rear structure being arranged in such a way that the first and second articulation elements are able to pivot relative to one another about an axis (y) that is substantially horizontal and substantially perpendicular to the direction of travel of the vehicle in the frame of reference of the motor vehicle, when the first and second articulation elements are thus fixed to or integrated into the central part of the axle component and to the underframe component of the motor vehicle, respectively,
- at least one front reinforcing element (51, 52) fixed on the one hand to the second articulation element and, on the other hand, to the tunnel, the rear structure being arranged in such a way that said at least one front reinforcing element allows at least some of the load in the direction of travel of the motor vehicle derived from the axle component to be transmitted to the tunnel, **characterized in that** it further comprises at least one rear reinforcing element (41) fixed to the second articulation element (31, 32) on the one hand, and on the other hand to the underframe component (3), the rear structure being arranged so that said at least one rear reinforcing element allows at least some of the vertical load derived from the axle component to be transmitted to the underframe component, the rear reinforcing element (41) and the second articulation element (31, 32) being arranged relative to one another so that they are substantially aligned in the vertical direction (z) in the frame of reference of the vehicle.

2. Motor vehicle rear structure (1) according to Claim 1, in which the vehicle component accommodated in the space defined by the axle component comprises a rear engine.

3. Motor vehicle rear structure (1) according to either one of Claims 1 and 2, in which the second articulation element is directly fixed to or integrated into the underframe component (3).

4. Motor vehicle rear structure (1) according to Claim 3, in which the second articulation element comprises two flanges (31, 32) integrated into the underframe component.

5. Motor vehicle rear structure (1) according to any one of Claims 1 to 4, in which said at least one front reinforcing element (51, 52) is obtained by pressing.

6. Motor vehicle rear structure (1) according to any one of Claims 1 to 5, in which the second articulation element (31, 32) and the front reinforcing element (51, 52) are arranged relative to one another so that they are substantially aligned in the direction of travel of the vehicle (x).

7. Motor vehicle comprising a rear structure according to any one of Claims 1 to 6.
